**Europäisches Patentamt**

**European Patent Office**

**Office européen des brevets**

(19)

(11) Veröffentlichungsnummer : **0 413 901 B1**

(12) **EUROPÄISCHE PATENTSCHRIFT**

(45) Veröffentlichungstag der Patentschrift :
25.11.92 Patentblatt 92/48

(51) Int. Cl.⁵ : **A21B 1/44**

(21) Anmeldenummer : **90108430.1**

(22) Anmeldetag : **04.05.90**

(54) **Backofen mit Heissluftumwälzung.**

(30) Priorität : **25.08.89 DE 3928172**

(43) Veröffentlichungstag der Anmeldung :
**27.02.91 Patentblatt 91/09**

(45) Bekanntmachung des Hinweises auf die
Patenterteilung :
**25.11.92 Patentblatt 92/48**

(84) Benannte Vertragsstaaten :
**AT DE DK ES FR IT SE**

(56) Entgegenhaltungen :
**DE-A- 2 547 209**
**FR-A- 2 467 548**
**US-A- 3 412 695**

(73) Patentinhaber : **Werner & Pfleiderer GmbH**
**Theodorstrasse 10 Postfach 30 12 20**
**W-7000 Stuttgart 30 (DE)**

(72) Erfinder : **Harm, Kurt**
**Stauffenbergstrasse 17**
**W-7014 Kornwestheim (DE)**
Erfinder : **Schöfer, Siegbert**
**Hohenzollern Strasse 1**
**W-7127 Pleidelsheim (DE)**
Erfinder : **Schröder, Helmut, Dipl.-Ing.(FH)**
**Im Krautgarten 10**
**W-7120 Bietigheim-Bissingen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 413 901 B1

## Beschreibung

Die Erfindung betrifft einen Backofen nach dem Oberbegriff des Patentanspruches 1.

Backöfen der oben genannten Gattung sind aus der DE-OS 14 32 916 oder DE-PS 34 31 505 bekannt. Bei diesen Backöfen wird der mit Backgut beladene Etagenwagen auf eine antreibbare Drehscheibe gestellt und während des Backvorganges langsam gedreht. Die Drehscheibe wird über Kette oder Drahtseil, welche unterhalb der Drehscheibe angeordnet sind und mittels eines außerhalb des Ofens angeordneten Getriebemotors angetrieben. Nachteilig hierbei ist, daß zwischen der Drehscheibe und dem Boden des Backofens immer ein Spalt vorhanden ist. Durch diesen Spalt können Schmutz oder Backrückstände in den darunter liegenden Raum fallen. Eine gründliche Reinigung dieses Raumes ist nur möglich, wenn die Drehscheibe entfernt wird. Selbst nach der Entfernung der Drehscheibe wird die Reinigung durch die vorhandenen Antriebselemente erheblich erschwert. Es sind auch Backöfen bekannt (z.B. DE-PS 18 00 800), bei denen der Drehantrieb von oben erfolgt. Zwar sind bei dieser Bauart gute Reinigungsmöglichkeiten für den Boden des Backofens gegeben, aber der Drehantrieb von oben erfordert eine größere Bauhöhe des Backofens und es sind Stützkonstruktionen für die Lastaufnahme erforderlich.

Der Erfindung liegt die Aufgabe zugrunde, bei einem Backofen gemäß dem Oberbegriff des Patentanspruches 1 eine schnelle und gründliche Reinigung des Backraumbodens, gegebenenfalls auch mittels Wasserstrahls, zu ermöglichen, ohne daß erschwerte Bedingungen für den Antrieb und die Aufnahme des Etagenwagens auf dem Drehgestell eintreten.

Die Aufgabe wird erfindungsgemäß durch die im Kennzeichen des Patentanspruches 1 angegebenen Merkmale gelöst. Weitere vorteilhafte Ausgestaltungen der Erfindung ergeben sich aus den Unteransprüchen.

Die erfindungsgemäße Gestaltung des Backraumbodens und des Drehantriebes ermöglichen jederzeit eine schnelle und gründliche Reinigung auch mittels Wasserstrahles. Dadurch ist der Einsatz des Backofens bei Beibehaltung des vorteilhaften unteren Drehantriebes für den Etagenwagen über den Bäckereibetrieb hinaus für andere Industriezweige, wo höhere Anforderungen an die Hygiene gestellt werden, wie z.B. bei der Fleischverarbeitung, möglich.

Entsprechend der Ausgestaltung nach Anspruch 2 ist eine sichere seitliche Führung für die Welle des Drehantriebes gegeben.

Gemäß der Ausgestaltung nach Anspruch 3 wird auch jeglicher Gas- und Dampfaustritt durch die Wellendurchführung am Backofenboden vermieden.

In Weiterbildung des Erfindungsgedankens ist nach Anspruch 4 eine vorteilhafte Lösung für ein stoßfreies Einfahren des Etagenwagens durch Bildung einer geraden Linie der Einfahrschienen mit der Auffahrschräge während des Einfahrvorganges geschaffen. Ferner ist durch die freie Auflage der Haube auf der Welle eine rutschkupplungartige Verbindung gegeben, die im Falle einer Behinderung der Drehbewegung des Etagenwagens eine Beschädigung des Antriebes vermeidet.

Die Ausgestaltung nach Anspruch 5 erlaubt eine Zentrierung und Führung des Tragprofiles durch die Haube während des Backprozesses und beim Ein- und Ausfahren des Etagenwagens.

Besonders zweckmäßig ist die Ausgestaltung nach Anspruch 6, wodurch über nur ein Verbindungselement, einmal eine Befestigung und andererseits eine Zentrierung und Führung für zwei unterschiedliche Bauteile erreicht ist.

Ein sicheres Auffahren und eine Fixierung des Etagenwagens auf dem Drehgestell ermöglichen die Merkmale des Anspruches 7.

Durch die Ausgestaltung nach Anspruch 8 ist eine Versteifung und Arretierung des Tragprofiles gegeben.

Ausführungsbeispiele sind an Hand der Zeichnung beschrieben.

Es zeigt:

Fig. 1 einen senkrechten Schnitt durch einen schematisch dargestellten Backofen

Fig. 2 den Backraumboden mit Drehgestell in der Einfahrphase des Etagenwagens

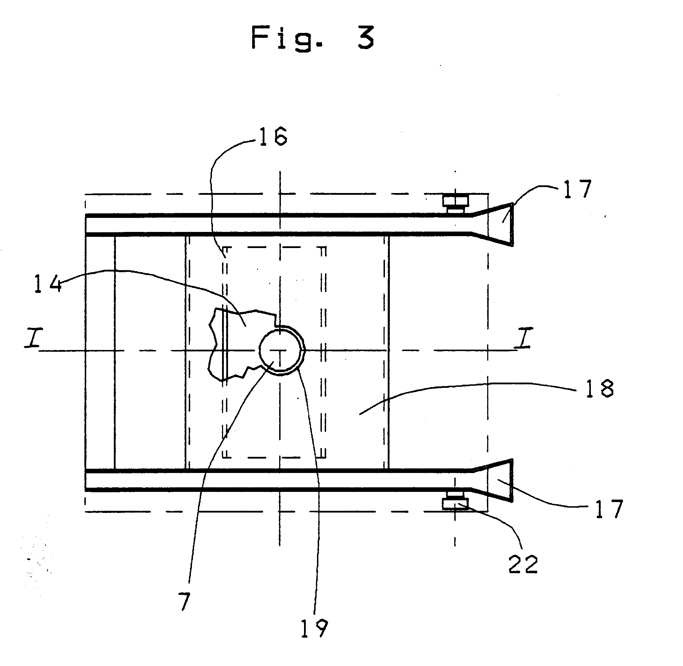

Fig. 3 eine Sicht auf das Drehgestell ohne Etagenwagen von oben

Fig. 4 einen Schnitt gemäß der Linie I-I entsprechend Fig. 3 in vergrößertem Maßstab, wobei die Haube mit einer Schraube befestigt ist.

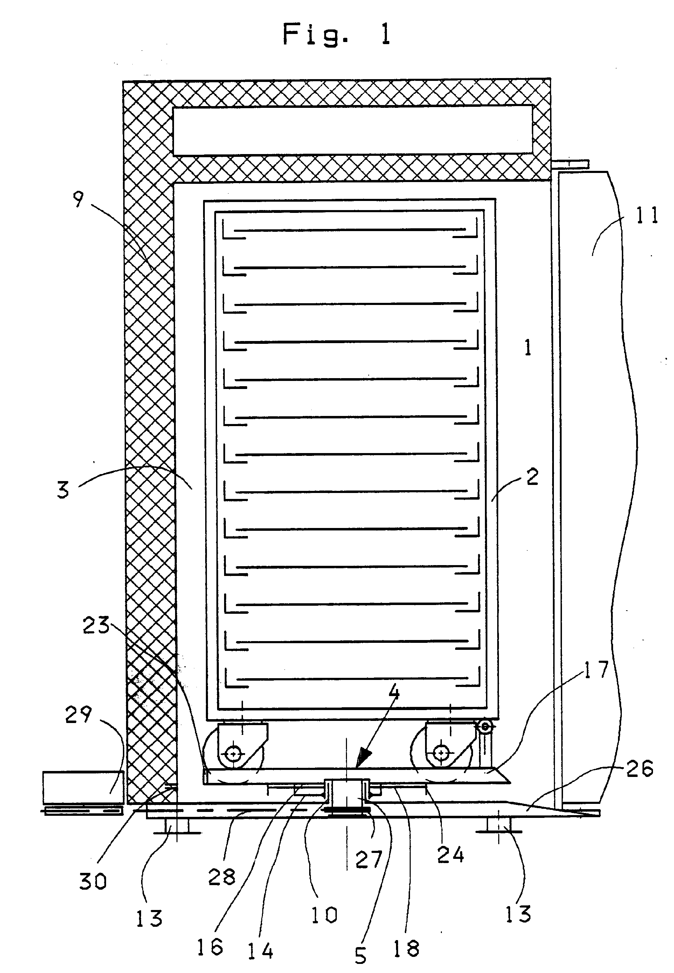

Bei dem in Fig. 1 dargestellten Backofen 1 handelt es sich um einen mit Heißluft-Umwälzheizung betriebenen Ofen in bekannter Bauart. Der Etagenwagen 2 steht während des Backvorganges auf dem Drehgestell 4 im Backraum 3 und wird über die Welle 5, die den Boden 6 durch die Öffnung 10 nach unten durchgreift und dort über einen Zahnkranz 27 und Kette 28 mit einem außen angeordneten Motor 29 in Verbindung steht, langsam gedreht.

Um die Öffnung 10 ist der Boden 6 hochgekragt, so daß ein zylindrischer Kragen um die Welle 5 gebildet ist. Im Kragen 8 kann noch eine Büchse 31, die als Gleitlager für die Welle 5 dient, angeordnet sein. Auf dem oberen Ende der Welle 5 ist eine das Drehgestell 4 tragende und den Kragen 8 umschließende Haube 7 angeordnet.

An der Haube 7 ist ein mit den Schenkeln 15 und 16 nach oben weisendes u-förmiges Blech 14 asymmetrisch angeschweißt. Auf den Schenkeln 15 und 16 ist das als Drehgestell 4 ausgebildete mit einer Bohrung 19 und Schienen 17 versehene Tragprofil 18 frei aufliegend angeordnet. Die Schienen 17 sind im Auffahrbereich mit Stützrollen 22 und am Ende mit Anschlägen 23 ausgerüstet.

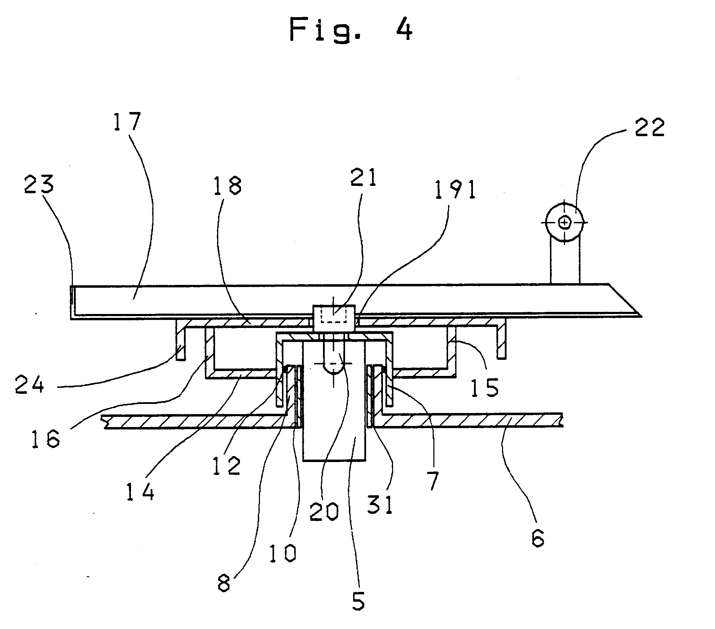

Gemäß der Ausbildung nach Fig. 4 ist die Haube 7 mittels einer Schraube 20 auf dem Ende der Welle 5 befestigt. Der Schraubkopf ist dabei so ausgebildet, daß er für das Tragprofil 18 als Zentrierung und bei der Kippstellung als Halterung dient. Zu diesem Fall ist das Tragprofil 18 mit einer nach Maßgabe des Schraubenkopfes 21 gestalteten Bohrung 191 ausgerüstet. Das Tragprofil 18 ist u-förmig mit nach unten weisenden Schenkeln 24 ausgebildet.

Der Backofen 1 ist unten mit Stützpunkten 13 ausgerüstet, die eine Reduzierung der Wärmeabgabe an den Fußboden bewirken und Platz für die Antriebselemente für die Welle 5 schaffen. Zwischen Kragen 8 und Haube 7 ist eine wärmebeständige Dichtung 12 angeordnet.

Die Wirkung der Vorrichtung ist wie folgt:

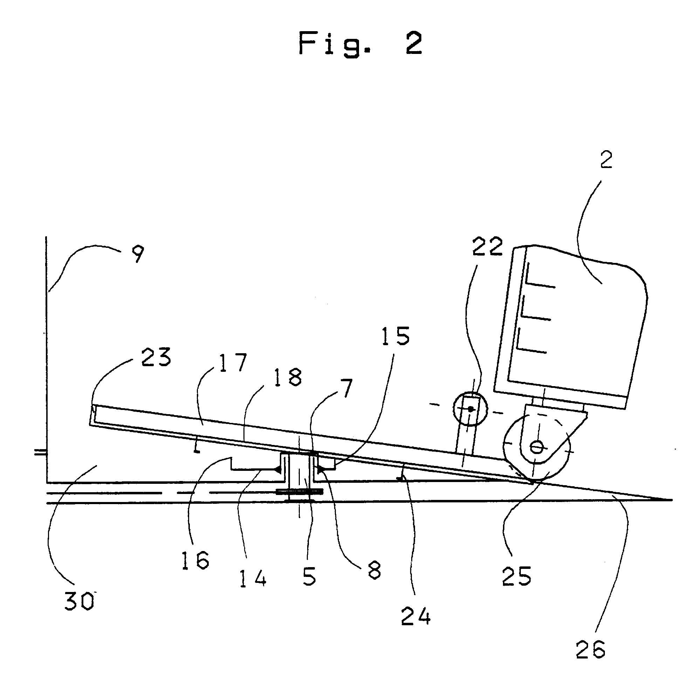

Beim Einfahren des mit Backgut beladenen Etagenwagen 2 über die im Türbereich vorgesehene Auffahrschräge 26 rollen die Räder 25 gegen die Schienen 17 und drücken das Tragprofil 18 (Wippe) nach unten (Fig. 2), so daß die Schienen 17 mit der Auffahrschräge 26 eine gerade Linie bilden, wodurch ein stoßfreies Ein- und Ausfahren gegeben ist.

Das Tragprofil 18 stützt sich dabei auf den Schenkel 15 ab. Die Stützrollen 22 sorgen dafür, daß die Wippe sich nicht hochstellt, wenn die vorderen Räder 25 des Etagenwagens 2 über den Abstützpunkt des Schenkels 15 rollen. Bevor der Schwerpunkt des Etagenwagens 2 über den Abstützpunkt rollt, sind auch die hinteren Räder in den Schienen 17 eingefahren. Das Tragprofil 18 (Wippe) wird nun vom Wagengewicht auf den Schenkel 16 gedrückt. Die Anschläge 23 begrenzen den Einfahrbereich des nun senkrecht stehenden Etagenwagen 2. Damit ist der Etagenwagen 2 drehbereit im Backraum 3 auf dem Drehgestell 4 eingebracht. Die warmfeste Dichtung 12 verhindert bei Back- und Drehvorgang ein Austreten von Dampf und anderen Gasen in dem außerhalb des Backraumes 3 liegenden Antriebsbereich der Welle 5. Durch die Bohrung 19, durch welche die Haube 7 ragt, ist die Wippe zentriert und verrutschfest in der Kippstellung gehalten. Da die Haube 7 nur lose auf dem oberen Ende der Welle 5 aufliegt, ist eine Art Rutschkupplung gegeben, die im Falle eines Hindernisses die Antriebselemente schonen. Bei der Ausführung nach Fig. 4, wo die Haube mittels der Schraube 20 befestigt ist, wird durch den Schraubenkopf 21 die Halterung und Zentrierung der Wippe (Tragprofil 18) gewährleistet. Die Schenkel 24 tragen zur Versteifung des Tragprofiles 18 bei und dienen gleichzeitig als Anschläge für die Verhinderung einer Drehbewegung des Tragprofiles, z.B. beim Auffahrvorgang des Etagenwagens 2 auf die Wippe. Da der Boden 6 ringsrum um die Öffnung 10 hochgekragt ist, ist jederzeit eine schnelle und gründliche Reinigung, auch mittels Wasserstrahl, gegeben. Bei einer Segmentbauweise des Ofens ist darauf zu achten, daß der seitliche Kragen 30 an den Ofenwänden 9 über die zu erwartende Überflutungsgrenze bemessen ist. Der zylindrische Kragen 8 ist durch die Haube 7 spritzwasserdicht abgedeckt.

Während der Reinigung kann das Drehgestell 4 falls erforderlich auch abgehoben werden. Dies ist durch die freie Auflage des Tragprofiles 18 problemlos möglich. Durch den Wegfall des Spaltes zwischen Drehscheibe und Boden des Backofens kann bei Beibehaltung des vorteilhaften unteren Drehantriebes jederzeit eine schnelle Reinigung des Backraumbodens vorgenommen werden, so daß der Backofen nicht nur im Bäckereibetrieb, sondern auch in Fleischwarenfabriken oder ähnlichen Betrieben einsetzbar ist, in denen bedeutend höhere hygienische Anforderungen an die Reinigung gestellt werden.

**Patentansprüche**

1. Backofen mit Heißluft-Umwälzheizung, in dessen Backraum ein das Backgut aufnehmender und während des Backens um eine senkrechte Achse rotierender Etagenwagen auf einem am Boden des Backraumes befindlichen Drehgestell steht, wobei das Drehgestell eine unterhalb des Backraumes gelagerte Welle aufweist, an welcher der Drehantrieb angreift und welche durch eine Öffnung im Boden in den Backraum ragt, dadurch gekennzeichnet, daß der Boden (6) des Backraumes (3) um die Öffnung (10) für die Welle (5) hochgekragt ist, wobei der so gebildete zylindrische Kragen (8) durch eine das Drehgestell (4) tragende am oberen Ende der Welle (5) angeordneten Haube (7) umschlossen ist.

2. Backofen nach Anspruch 1, dadurch gekennzeichnet, daß der Kragen (8) mit einer Büchse (31) versehen ist und als Gleitlager für die Welle (5) ausgebildet ist.

3. Backofen nach Anspruch 1 und 2, dadurch gekennzeichnet, daß zwischen Kragen (8) und Haube (7) eine temperaturbeständige Dichtung (12) angeordnet ist.

4. Backofen nach Anspruch 1-3, dadurch gekennzeichnet, daß an der Haube (7) ein u-förmiges Blech (14) asymmetrisch mit den Schenkeln (15, 16) nach oben befestigt ist, auf denen frei aufliegend ein mit Schienen (17) ausgerüstetes wippbares Tragprofil (18) angeordnet ist.

5. Backofen nach Anspruch 4, dadurch gekennzeichnet, daß das Tragprofil (18) mit einer Bohrung (19), die größer als der Außendurchmesser der Haube (7) ist, versehen ist.

6. Backofen nach Anspruch 1-4, dadurch gekennzeichnet, daß die Haube (7) mittels einer Schraube (20) auf der Welle (5) befestigt ist, wobei der Schraubenkopf (21) so gestaltet ist, daß dieser mit einer nach Maßgabe des Schraubenkopfes (21) eingebrachten Bohrung (191) des Tragprofiles (18) in Wirkungsverbindung steht.

7. Backofen nach Anspruch 4, dadurch gekennzeichnet, daß an den Schienen (17) im Auffahrbereich Stützrollen (22) und am Ende Anschläge (23) angeordnet sind.

8. Backofen nach Anspruch 4, dadurch gekennzeichnet, daß das Tragprofil (18) aus einem uförmigen Blech mit nach unten weisenden Schenkeln (24) besteht.

**Claims**

1. Baking oven with heating by hot air circulation, in the baking chamber of which a tier wagon, which receives the stock to be baked and rotates about a vertical axis during the backing, stands on a turntable disposed at the base of the baking chamber, wherein the turntable has a shaft, which is mounted underneath the baking chamber and projects through an opening in the base in the baking chamber and at which the rotary drive engages, characterised thereby that the base (6) of the baking chamber (3) is collared upwards about the opening (10) for the shaft (5), wherein the thus formed cylindrical collar (8) is surrounded by a hood (7) arranged at the upper end of the shaft (5) and carrying the turntable (4).

2. Baking oven according to claim 1, characterised thereby that the collar (8) is provided with a bush (31) and is constructed as slide bearing for the shaft (5).

3. Baking oven according to claims 1 and 2, characterised thereby that arranged between collar (8) and hood (7) is a temperature-resistant seal (12).

4. Baking oven according to claims 1 and 3, characterised thereby that asymmetrically fastened to the hood (7) is a U-shaped sheet metal plate (14) with the limbs (15, 16) upwards on which a tiltable carrier profile member (18), which is equipped with rails (17), is arranged to be freely lying.

5. Baking oven according to claim 4, characterised thereby that the carrier profile member (18) is provided with a bore (19) which is larger than the outer diameter of the hood (7).

6. Baking oven according to claims 1 to 4, characterised thereby that the hood (7) is fastened to the shaft (5) by means of a screw (20), wherein the screw head (21) is so shaped that this stands in operative connection with a bore (191), which is made in proportion to the screw head (21), of the carrier profile member (18).

7. Baking oven according to claim 4, characterised thereby that support rollers (22) are arranged at the rails (17) in the drive-on region and abutments (23) are arranged at the end.

8. Baking oven according to claim 4, characterised thereby that the carrier profile member (18) consists of a U-shaped sheet metal plate with downwardly pointing limbs (24).

**Revendications**

1. Four de boulangerie à chauffage par circulation d'air chaud, dans la chambre de cuisson duquel un chariot à rayonnages, recevant le produit à cuire et tournant autour d'un axe vertical au cours de la cuisson, se dresse sur un châssis tournant disposé sur la sole de la chambre de cuisson, le châssis tournant présentant un arbre monté au-dessous de la chambre de cuisson, avec lequel l'entrainement en rotation vient en prise, et qui s'engage dans la chambre de cuisson en traversant un orifice pratiqué dans la sole, caractérisé par le fait que la sole (6) de la chambre de cuisson (3) est relevée autour de l'orifice (10) destiné à l'arbre (5), le collet cylindrique (8) ainsi formé étant ceinturé par une coiffe (7) qui porte le châssis tournant (4), et est placée à l'extrémité supérieure de l'arbre (5).

2. Four de boulangerie selon la revendication 1, caractérisé par le fait que le collet (8) est muni d'une douille (31), et est conçu en tant que coussinet de glissement pour l'arbre (5).

3. Four de boulangerie selon les revendications 1 et 2, caractérisé par le fait qu'une garniture d'étanchement (12) thermiquement stable est interposée entre le collet (8) et la coiffe (7).

4. Four de boulangerie selon les revendications 1-3, caractérisé par le fait qu'une tôle (14) configurée en U est fixée asymétriquement à la coiffe (7) et présente des branches (15, 16) orientées vers le haut, sur lesquelles repose librement un profilé basculant de support (18) équipé de glissières (17).

5. Four de boulangerie selon la revendication 4, caractérisé par le fait que le profilé de support (18) est percé d'un orifice (19) qui est plus grand que le diamètre externe de la coiffe (7).

6. Four de boulangerie selon les revendications 1-4, caractérisé par le fait que la coiffe (7) est fixée sur l'arbre (5) au moyen d'un boulon (20), la tête (21) dudit boulon étant conçue pour, être en liaison interactive avec un perçage (191) du profilé de support (18), pratiqué en concordance dimensionnelle avec la tête (21) du boulon.

7. Four de boulangerie selon la revendication 4, caractérisé par le fait que des galets de soutien (22) et des butées (23) sont implantés sur les glissières (17), respectivement dans la zone d'ascension et à l'extrémité.

8. Four de boulangerie selon la revendication 4, caractérisé par le fait que le profilé de support (18) consiste en une tôle configurée en U, à branches (24) orientées vers le bas.

# Fig. 1

# Fig. 2

# Fig. 3

# Fig. 4